# EUROPÄISCHE PATENTSCHRIFT

(11) **EP 3 812 646 B1**
(45) Veröffentlichungstag und Bekanntmachung des Hinweises auf die Patenterteilung: **26.07.2023**
(21) Anmeldenummer: 20198446.5
(22) Anmeldetag: 25.09.2020
(51) Int. Cl.: F17C 13/12

(54) **DRUCKTANK, SYSTEM ZUM ÜBERWACHEN EINES DRUCKTANKS UND KRAFTFAHRZEUG**
PRESSURE TANK, SYSTEM FOR MONITORING A PRESSURE TANK AND MOTOR VEHICLE
RÉSERVOIR SOUS PRESSION, SYSTÈME DE SURVEILLANCE D'UN RÉSERVOIR SOUS PRESSION ET VÉHICULE AUTOMOBILE

(30) Priorität: 21.10.2019 DE 102019128318
(43) Veröffentlichungstag der Anmeldung: 28.04.2021
(73) Patentinhaber: Audi AG, 85045 Ingolstadt (DE)
(72) Erfinder: Thurmeier, Markus, 84166 Adlkofen (DE); Berger, Johann, 84571 Reischach (DE); Mlekusch, Bernd, 9300 Sankt Veit/Glan (AT); Fischlschweiger, Michael, 8786 Rottenmann (AT)

(56) Entgegenhaltungen:
- EP-A1- 2 780 664
- EP-A1- 3 521 800
- DE-A1-102011 103 407
- JP-A- 2011 185 426
- US-A1- 2013 139 897

## Beschreibung

Die Erfindung betrifft einen Drucktank, welcher zum Speichern eines komprimierten Brennstoffs ausgebildet ist, mit einem Grundkörper, durch welchen ein Behältnis zum Aufnehmen des Brennstoffs gebildet ist. Wenigstens eine zumindest einen elektrischen Leiter umfassende Sensoreinrichtung dient dem Erfassen zumindest einer Größe, welche ein Rückschließen auf einen Zustand des Grundkörpers zulässt. Des Weiteren betrifft die Erfindung ein System zum Überwachen eines Drucktanks und ein Kraftfahrzeug.

Die JP 2011 185 426 A beschreibt einen Wasserstofftank mit einem Tankkörper und einer Isolierschicht auf einer Außenseite des Tankkörpers. Hierbei ist an der Außenseite der Isolierschicht eine leitfähige Schicht angeordnet. Ein Widerstandswert der leitfähigen Schicht ändert sich entsprechend einer Verformung, und die leitfähige Schicht dient dazu, die Verformung zu erfassen.

Die DE 10 2014 100 551 A1 beschreibt ein Verfahren zur Detektion einer Auskleidungsbeulung in einem Speichersystem für Druckgas. Das Druckgas-Speichersystem umfasst eine äußere Schale mit einer inneren Fläche und einer äußeren Fläche. Die innere Fläche definiert ein inneres Volumen zum Aufnehmen des Druckgases. Eine erste elektrisch leitfähige Schicht ist an der äußeren Schale befestigt. Eine zweite elektrisch leitfähige Schicht ist an einer inneren Auskleidung der äußeren Schale befestigt. Ein Kapazitätsmessgerät misst die Kapazität zwischen der ersten und der zweiten elektrisch leitfähigen Schicht. Hierbei soll anhand einer Änderung der Kapazität eine Beulung in dem Speichersystem festgestellt werden.

Des Weiteren beschreibt die EP 2 780 664 B1 einen Dehnungssensor für gekrümmte Oberflächen, welcher eine optische Faser mit einem Faser-Bragg-Gitter aufweist.

Auch die DE 100 04 384 C2 beschreibt eine Anordnung zur Erfassung von Dehnungen mit einer auf einen Träger applizierten Deckschicht, in welche ein optischer Sensor mit einer Lichtleitfaser eingebettet ist.

Drucktanks wie etwa Gasflaschen zum Speichern eines komprimierten Brennstoffs, beispielsweise zum Speichern von Wasserstoff, können insbesondere einen zum Aufnehmen des Brennstoffs ausgebildeten Grundkörper aufweisen, welcher durch ein Faserverbundmaterial wie etwa einen Faserverbundkunststoff (FVK) gebildet ist. Ein derartiger Grundkörper kann mit einem Dehnungsmessstreifen oder einer auf ein Vlies gedruckten Elektronik ausgestattet werden, um Dehnungen und Schäden in dem Faserverbund-Laminat zu detektieren beziehungsweise zu messen, und um Gebrauchslasten des Drucktanks im Betrieb zu bestimmen.

Ein Sensor wie etwa der Dehnungsmessstreifen kann hierbei in das Faserverbundlaminat einlaminiert werden, um mechanische Spannungen im Inneren des Behältnisses messen zu können, welches durch den Grundkörper gebildet ist. Dies wird bei Drucktanks beziehungsweise Gasflaschen, insbesondere bei Wasserstoffflaschen, vorgenommen, damit jederzeit ermittelt werden kann, in welchem Zustand sich die Gasflasche befindet. Dadurch soll die Möglichkeit geschaffen werden, beispielsweise bei einem Überdruck oder bei einer Leckage zeitnah reagieren zu können.

Jedoch ist die Herstellung von Drucktanks oder Gasflaschen aus einem Faserverbundkunststoff deutlich komplexer als die Herstellung von Standardbauteilen aus faserverstärktem Kunststoff. Dies liegt daran, dass bei der Herstellung eines aus Faserverbundkunststoff hergestellten Grundkörpers eines Drucktanks die einzelnen Lagen des Faserverbundmaterials gewickelt werden. Dieses Wickeln von Lagen aus beispielsweise kohlenstofffaserverstärkten Kunststoffen (CFK) oder glasfaserverstärkten Kunststoffen (GFK) macht das Einbringen von Sensoren wie etwa Dehnungsmessstreifen oder von einer auf ein Vlies gedruckten Elektronik in den Grundkörper sehr schwierig. Denn beispielsweise die Elektronik reagiert sehr kritisch auf einen hohen Druck und eine hohe Temperatur sowie weitere Prozessparameter, wie sie bei der Herstellung eine Drucktanks aus einem Faserverbundkunststoff auftreten. Dies kann wiederum dazu führen, dass sich mittels der Elektronik schließlich nicht mit einer gewünschten Genauigkeit Messwerte erfassen lassen oder dass sogar gar keine Messung stattfinden kann.

Darüber hinaus ist ein kontaktloses Auslesen von Messwerten beziehungsweise Messsignalen etwa über einen RFID-Chip (RFID=Radio Frequency Identification, Identifizierung mit Hilfe elektromagnetischer Wellen) nicht möglich, da ein RFID-Chip nicht in das Material des Grundkörpers einlaminiert werden kann. Es müsste somit beispielsweise ein Dehnungsmessstreifen oder dergleichen Sensoreinrichtung freigelegt werden, um ein leitungsgebundenes Abgreifen von Messsignalen zu ermöglichen. Dies ist wiederum nachteilig, weil dann insbesondere Feuchtigkeit an freigelegte Bereiche des Dehnungsmessstreifens gelangen kann und auch weitere Beeinträchtigungen des Dehnungsmessstreifens möglich sind. Zudem ist beim Einlaminieren des Dehnungsmessstreifens in den Grundkörper und dem anschließenden Freilegen von Bereichen des Dehnungsmessstreifens in dem Grundkörper eine Störstelle ausgebildet, an welcher der Grundkörper in unerwünschter Art und Weise geschwächt ist. Auch dies ist folglich nachteilig.

Des Weiteren ist es zwar prinzipiell möglich, einen kapazitiven Sensor an einer Außenseite des Grundkörpers anzubringen. Mittels eines derartigen, beispielsweise zwei folienartige Elektroden umfassenden Sensors lassen sich jedoch nur Auswirkungen von Drücken erfassen, welche von außen auf den Grundkörper einwirken und keine Veränderungen eines im Inneren des Grundkörpers herrschenden Drucks beziehungsweise einer im Inneren des Grundkörpers herrschenden Temperatur.

Zudem weisen insbesondere Drucktanks, bei welchen der Grundkörper aus faserverstärktem Kunststoff gebildet ist, jedoch auch beispielsweise aus Metall gebildete Drucktanks Unebenheiten auf. Bei dem aus Metall gebildeten Drucktank treten solche Unebenheiten oder Unregelmäßigkeiten an der äußeren Oberfläche etwa im Bereich von Schweißnähten und dergleichen auf. Bei einem Drucktank mit aus faserverstärktem Kunststoff gebildetem Grundkörper ergeben sich demgegenüber an Stellen mit einem hohen Faseranteil Erhebungen und an Stellen mit einem hohen Matrixanteil beziehungsweise Harzanteil sogenannte Einfallstellen. Diese Erhebungen und Einfallstellen führen zu einer welligen beziehungsweise unregelmäßigen Oberfläche an der Außenseite des Grundkörpers.

Dies führt dazu, dass sich ein kapazitiver Sensor nicht vollständig beziehungsweise nicht vollflächig an den Grundkörper anschmiegen kann. Vielmehr können zwischen dem kapazitiven Sensor und der Oberfläche des Grundkörpers Lufteinschlüsse und dergleichen vorhanden sein. Einerseits können so Messergebnisse verfälscht werden. Andererseits können dadurch bestimmte lokale Veränderungen des Grundkörpers, welche auf einer Dehnung beruhen, gar nicht festgestellt werden. Ein mittels des kapazitiven Sensors erhältliches Messergebnis kann auch dadurch verfälscht sein, dass eine Seite des kapazitiven Sensors starr mit der Oberfläche des Grundkörpers verklebt ist. Folglich sind kapazitive Sensoren zum Erfassen des Zustands des Grundkörpers eines Drucktanks mit erheblichen Schwierigkeiten in der Anwendung behaftet.

Aufgabe der vorliegenden Erfindung ist es, einen Drucktank der eingangs genannten Art zu schaffen, welcher eine verbesserte Erfassung eines Zustands des Grundkörpers ermöglicht, sowie ein entsprechendes System zum Überwachen eines Drucktanks und ein Kraftfahrzeug mit einem solchen Drucktank anzugeben.

Diese Aufgabe wird durch einen Drucktank mit den Merkmalen des Patentanspruchs 1, ein System mit den Merkmalen des Patentanspruchs 9 und ein Kraftfahrzeug mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Der erfindungsgemäße Drucktank, welcher insbesondere zur Anwendung in einem Kraftfahrzeug vorgesehen sein kann, ist zum Speichern eines komprimierten Brennstoffs ausgebildet. Durch einen Grundkörper des Drucktanks ist ein Behältnis zum Aufnehmen des Brennstoffs gebildet. Der Drucktank weist wenigstens eine Sensoreinrichtung zum Erfassen zumindest einer Größe auf, wobei die zumindest eine Größe ein Rückschließen auf einen Zustand des Grundkörpers zulässt. Die wenigstens eine Sensoreinrichtung umfasst zumindest einen elektrischen Leiter. Zwischen der wenigstens einen Sensoreinrichtung und einer Außenseite des Grundkörpers ist eine Ausgleichsschicht angeordnet. Die Ausgleichsschicht ist dazu ausgebildet, bei einem Vorhandensein von Unebenheiten an der Außenseite des Grundkörpers die Unebenheiten zumindest im Bereich der wenigstens einen Sensoreinrichtung auszugleichen.

Mit anderen Worten sorgt die Ausgleichsschicht dafür, dass die wenigstens eine Sensoreinrichtung mit einem weniger welligen beziehungsweise weniger unregelmäßigen Untergrund in Kontakt ist als dies beim Anbringen der wenigstens einen Sensoreinrichtung direkt an der Außenseite des Grundkörpers der Fall wäre. Aufgrund der damit einhergehenden flächigen Anlage der wenigstens einen Sensoreinrichtung an der Ausgleichsschicht wird erreicht, dass Veränderungen des Zustands des Grundkörpers besser erfasst werden können. Es können nämlich einerseits Veränderungen des Zustands des Grundkörpers erfasst werden, welche auf Veränderungen eines Zustands des komprimierten Brennstoffs im Inneren des durch den Grundkörper gebildeten Behältnisses beruhen. Des Weiteren können auch Veränderungen des Zustands des Grundkörpers erfasst werden, welche von äußeren Einflüssen wie etwa einer, insbesondere lokalen, Druckbeaufschlagung des Grundkörpers oder dergleichen Belastung herrühren. Folglich ist eine verbesserte Erfassung des Zustands des Grundkörpers ermöglicht.

Erfindungsgemäß ist die Ausgleichsschicht anisotrop ausgebildet. Hierbei bewirkt eine Verformung der Ausgleichsschicht auf einer dem Grundkörper zugewandten Seite der Ausgleichschicht um einen ersten Betrag eine Verformung der Ausgleichsschicht auf einer der wenigstens einen Sensoreinrichtung zugewandten Seite der Ausgleichsschicht um einen zweiten Betrag, welcher größer ist als der erste Betrag. Dadurch führt beispielsweise die Einleitung einer Dehnung in die Ausgleichsschicht auf der dem Grundkörper zugewandten Seite zu einer größeren Dehnung auf der Seite der Ausgleichsschicht, welcher der wenigstens einen Sensoreinrichtung zugewandt ist. Folglich kann die Ausgleichsschicht ein Verstärken der mittels der wenigstens einen Sensoreinrichtung zu erfassenden Veränderung des Grundkörpers bewirken. Auf diese Weise lassen sich selbst mit einer vergleichsweise wenig empfindlichen Sensoreinrichtung bereits sehr geringe Veränderungen des Zustands des Grundkörpers erfassen.

Beispielsweise kann die Ausgleichsschicht eine Polymermatrix mit gerichteten Füllstoffen umfassen, damit die Ausgleichsschicht die anisotropen Eigenschaften aufweist. Des Weiteren kann die Anisotropie der Ausgleichsschicht dadurch bewirkt sein, dass die Ausgleichsschicht aus einem Material mit gerichteten Molekülen gebildet ist, oder indem die Ausgleichsschicht einen verstreckten Kunststoff umfasst oder aus wenigstens einem verstreckten Kunststoff gebildet ist.

Eine Innenseite des Grundkörpers ist dann, wenn in dem durch den Grundkörper gebildeten Behältnis der komprimierte Brennstoff enthalten ist, dem Brennstoff zugewandt. Demgegenüber ist die Außenseite des Grundkörpers der Umgebung des Drucktanks zugewandt. Der Drucktank oder Druckbehälter kann auch zum Speichern anderer Medien als einem komprimierten Brennstoff ausgebildet sein, etwa zum Speichern wenigstens eines Gases, beispielsweise von Druckluft, und/oder wenigstens einer Flüssigkeit, welches beziehungsweise welche in dem Drucktank unter einem höheren Druck steht als dem Umgebungsdruck. Auch für derartige Druckbehälter ist die Möglichkeit des Erfassens von Veränderungen des Zustands des Grundkörpers vorteilhaft, welche auf Veränderungen eines Zustands des sich in dem Behältnis befindenden Mediums beruhen.

Vorteilhaft ist des Weiteren, dass sich die Ausgleichsschicht und die an der Ausgleichsschicht außenseitig angeordnete wenigstens eine Sensoreinrichtung mit sehr geringem Aufwand vergleichsweise großflächig an dem Grundkörper anbringen lassen. Es brauchen also nicht wie beim Anbringen von Dehnungsmessstreifen an der Außenseite des Grundkörpers sehr viele Dehnungsmessstreifen verwendet zu werden, um in möglichst vielen Bereichen des Grundkörpers Veränderungen erfassen zu können. Vielmehr können sehr einfach auch große Bereiche des Grundkörpers, insbesondere der gesamte Grundkörper, mittels der wenigstens einen Sensoreinrichtung vermessen werden. Im Vergleich dazu ist beim Anbringen eines Dehnungsmessstreifens nur in einem lokal sehr begrenzten Bereich ein Erfassen der zumindest einen Größe möglich, welche das Rückschließen auf den Zustand des Grundkörpers zulässt.

Die Ausgleichsschicht oder Grenzschicht dient zudem einem Ausgleichen von Toleranzen der Außenseite beziehungsweise der äußeren Oberfläche des Grundkörpers und der wenigstens einen Sensoreinrichtung. Es brauchen folglich keine aufwendigen Nachbearbeitungsschritte bei der Herstellung des Grundkörpers vorgenommen zu werden, damit die Außenseite des Grundkörpers möglichst frei von Unebenheiten beziehungsweise Unregelmäßigkeiten wie etwa Erhebungen, Vertiefungen und dergleichen ist. Vielmehr wird ein Auffüllen von Vertiefungen und ein Aufnehmen von Erhebungen in entsprechende Einbuchtungen der Ausgleichsschicht durch das Anbringen der Ausgleichsschicht an der Außenseite des Grundkörpers realisiert. Insbesondere kann somit auf ein Polieren oder Glätten der Außenseite des Grundkörpers verzichtet werden. Und dennoch ist durch die Ausgleichsschicht eine besonders glatte beziehungsweise regelmäßige Oberfläche als Unterlage für die wenigstens eine Sensoreinrichtung bereitgestellt.

Dadurch, dass die Sensoreinrichtung den zumindest einen elektrischen Leiter umfasst, ist zudem eine Ankopplung an eine Auswerteeinrichtung, welche zum Auswerten wenigstens einer elektrischen Größe zum Zwecke des Rückschlie-ßens auf den Zustand des Grundkörpers ausgebildet ist, auf besonders einfache Art und Weise möglich. Insbesondere kann so beim Erfassen eines Zustands des Grundkörpers, welcher auf einen Fehler oder eine Beschädigung hinweist, frühzeitig eine Warnung oder dergleichen ausgegeben werden.

Dadurch können rechtzeitig Maßnahmen wie etwa ein Verringern eines Drucks des Brennstoffs in dem Behältnis ergriffen werden, um beispielsweise einen Unfall oder ein Bersten des Grundkörpers zu vermeiden.

Die wenigstens eine Sensoreinrichtung kann insbesondere als Folie ausgebildet sein, auf welche der zumindest eine elektrische Leiter, insbesondere durch Drucken, aufgebracht ist. Eine derartige Folie lässt sich sehr einfach mit gewünschten Abmessungen bereitstellen, welche das Erfassen des Zustands des Grundkörpers in einem großflächigen Bereich desselben ermöglicht.

Vorzugsweise weist die Ausgleichsschicht eine größere Dicke auf als die wenigstens eine Sensoreinrichtung. Dadurch lassen sich auch größere Unregelmäßigkeiten beziehungsweise Unebenheiten ausgleichen, welche an der Außenseite des Grundkörpers vorhanden beziehungsweise ausgebildet sein können. Und dennoch wird die wenigstens eine Sensoreinrichtung nicht durch das Vorhandensein derartiger Unebenheiten oder Unregelmäßigkeiten beeinträchtigt.

Es kann vorgesehen sein, dass eine Hauptrichtung der Verformung der Ausgleichsschicht um den ersten Betrag von einer Hauptrichtung der Verformung der Ausgleichsschicht um den zweiten Betrag verschieden ist. Insbesondere kann eine Hauptdehnungsrichtung des Grundkörpers in einem Winkel größer null zu einer Hauptdehnungsrichtung stehen, welche mittels der wenigstens einen Sensoreinrichtung erfasst wird. Auf diese Weise ist eine besonders große Freiheit bei einem Anbringen der wenigstens einen Sensoreinrichtung an der Ausgleichsschicht gegeben.

Vorzugsweise weist die wenigstens eine Sensoreinrichtung an einer dem Grundkörper abgewandten Oberseite der Sensoreinrichtung eine Schutzschicht aus einem elektrisch isolierenden Material auf. Dadurch ist eine Beeinträchtigung des zumindest einen elektrischen Leiters etwa aufgrund von Korrosion besonders weitgehend vermieden. Zudem ist durch die Schutzschicht aus dem elektrisch isolierenden Material ein Schutz vor einer mechanischen Beschädigung des zumindest einen elektrischen Leiters bereitgestellt. Folglich ist die wenigstens eine Sensoreinrichtung besonders robust, und es kann über einen besonders langen Zeitraum hinweg mittels der Sensoreinrichtung ein weitgehend ungestörtes Erfassen der zumindest einen Größe erreicht werden.

Vorzugsweise ist die Ausgleichsschicht als Trägermaterial für die wenigstens eine Sensoreinrichtung ausgebildet. Hierbei ist durch das Trägermaterial ein Anhaften eines die Ausgleichsschicht und die wenigstens eine Sensoreinrichtung umfassenden Verbunds an der Außenseite des Grundkörpers bewirkt. Es kann dann auf das Vorsehen eines zusätzlichen Haftvermittlers oder Klebstoffs zum Anbringen der Ausgleichsschicht an der Außenseite des Grundkörpers verzichtet werden. Dies macht das Anbringen des Verbunds an der Außenseite des Grundkörpers besonders aufwandsarm. Zudem lässt sich der Verbund, welcher die als Trägermaterial dienende Ausgleichsschicht und die wenigstens eine Sensoreinrichtung umfasst, einfacher handhaben als die wenigstens eine Sensoreinrichtung alleine.

Die Ausgleichsschicht kann somit insbesondere die Funktion haben, dass aufgrund der Ausgleichsschicht eine optimale und dauerhafte Anhaftung der wenigstens einen Sensoreinrichtung an der Außenseite des Grundkörpers bewirkt ist.

Insbesondere kann vorgesehen sein, dass die Ausgleichsschicht an ihrer dem Grundkörper zugewandten Seite andere Oberflächeneigenschaften aufweist als an ihrer der wenigstens einen Sensoreinrichtung zugewandten Seite. Beispielsweise kann die jeweilige Seite, also die dem Grundkörper zugewandte Oberfläche und die der wenigstens einen Sensoreinrichtung zugewandte Oberfläche, eine Beschaffenheit aufweisen, welche für ein gutes Anhaften der Ausgleichsschicht an der Außenseite des Grundkörpers einerseits und für ein gutes Anhaften der wenigstens einen Sensoreinrichtung an der Seite der Ausgleichsschicht sorgt, welche der wenigstens einen Sensoreinrichtung zugewandt ist.

Die Ausgleichsschicht kann bezüglich ihrer Oberflächeneigenschaften insbesondere auf das Material des Grundkörpers einerseits und das Material der Sensoreinrichtung andererseits abgestimmt sein, insbesondere im Hinblick auf das Anhaften an dem jeweiligen Material. So kann eine sehr gute Verbindung der Sensoreinrichtung mit dem Grundkörper durch die Ausgleichsschicht sichergestellt werden.

Der Verbund, welcher die Ausgleichsschicht und die wenigstens eine Sensoreinrichtung umfasst, kann vollflächig an der Außenseite des Grundkörpers angeordnet sein, also die Außenseite des Grundkörpers zumindest nahezu vollflächig oder vollständig bedecken.

Zum Erfassen von Veränderungen des Zustands des Grundkörpers ist jedoch auch ein die Ausgleichsschicht und die wenigstens eine Sensoreinrichtung umfassender Verbund geeignet, welcher lediglich an einem Teilbereich der Außenseite des Grundkörpers angebracht ist.

Vorzugsweise ist daher ein die Ausgleichsschicht und die wenigstens eine Sensoreinrichtung umfassender Verbund als Streifen ausgebildet. So lässt sich mit besonders geringem Aufwand über einen vergleichsweise langen Teilbereich des Grundkörpers hinweg eine Veränderung des Zustands des Grundkörpers erfassen.

Bei einem Drucktank, bei welchem der Grundkörper als Zylinder mit einer axialen Länge ausgebildet ist, welche größer ist als ein Durchmesser des Zylinders, kann der Streifen in Längsrichtung beziehungsweise in die axiale Richtung verlaufend oder schräg zu der axialen Richtung beziehungsweise Längsrichtung verlaufend an der Außenseite des Grundkörpers angeordnet sein.

Im Hinblick auf den Aufwand und den Materialeinsatz besonders günstig ist es, wenn der Streifen in Umfangsrichtung um den Grundkörper umläuft. Denn so kann eine Vielzahl von Veränderungen des Zustands des Grundkörpers auf einfache und aufwandsarme Weise erfasst werden. Insbesondere lässt sich so eine Dehnung des Grundkörpers etwa aufgrund eines Druckanstiegs im Inneren des Behältnisses besonders einfach detektieren beziehungsweise erfassen.

Die wenigstens eine Sensoreinrichtung kann zumindest einen Anschluss für ein leitungsgebundenes Abgreifen eines mit der zumindest einen Größe korrespondierenden Messsignals aufweisen. So lässt sich eine Kopplung mit einer Auswerteeinrichtung besonders einfach und aufwandsarm realisieren.

Zusätzlich oder alternativ kann die wenigstens eine Sensoreinrichtung eine Übertragungseinrichtung zum drahtlosen Übertragen eines mit der zumindest einen Größe korrespondierenden Messsignals aufweisen. Dadurch kann der Aufwand zum elektrischen Isolieren eines Anschlusses der Sensoreinrichtung entfallen. Des Weiteren entfällt bei einer zum drahtlosen Übertragen des Messsignals ausgebildeten Übertragungseinrichtung der mit dem Verlegen von Leitungen verbundene Aufwand. Insbesondere kann die Übertragungseinrichtung als RFID-Chip ausgebildet sein. Die Übertragungseinrichtung, insbesondere der RFID-Chip oder RFID-Baustein, kann sehr einfach in ein den zumindest einen elektrischen Leiter aufweisendes Material, insbesondere Folienmaterial, einlaminiert werden. Dann ist die Übertragungseinrichtung zugleich gut zur Umgebung hin geschützt. Die Übertragungseinrichtung kann insbesondere wenigstens einen Kondensator und/oder wenigstens eine Leiterschleife umfassen.

Vorzugsweise weist die Ausgleichsschicht eine sehr geringe Eigensteifigkeit auf. Insbesondere kann die Ausgleichsschicht eine Zugfestigkeit von maximal 3000 MPa aufweisen. Durch eine derartige, sehr wenig steife Ausgleichsschicht lassen sich auf besonders wirkungsvolle Art und Weise Zustandsänderungen des Grundkörpers, welche auf Zustandsänderungen des in dem Behältnis aufgenommenen Brennstoffs beruhen, über die Ausgleichsschicht an die wenigstens eine Sensoreinrichtung weitergeben beziehungsweise weiterleiten und so mittels der Sensoreinrichtung erfassen.

Insbesondere kann die Ausgleichsschicht aus Kunststoff gebildet sein, beispielsweise aus einem Kunststoffschaum. Wenn die Ausgleichsschicht durch ein Schaummaterial, insbesondere durch den Kunststoffschaum, bereitgestellt ist, so lassen sich besonders einfach auch größere Erhebungen beziehungsweise Vertiefungen, insbesondere Einfallstellen oder dergleichen Unebenheiten ausgleichen.

Wenn der Grundkörper aus Metall gebildet ist, können die Unebenheiten insbesondere durch Schweißnähte oder dergleichen gebildet sein. Derartige Unebenheiten lassen sich leicht mittels der Ausgleichsschicht ausgleichen.

Im Hinblick auf ein geringes Gewicht des Drucktanks ist es vorteilhaft, wenn der Grundkörper zumindest überwiegend aus faserverstärktem Kunststoff gebildet ist. In diesem Fall können die Unebenheiten oder Unregelmäßigkeiten durch Einfallstellen in einem Matrixmaterial, insbesondere in einem Harz, des faserverstärkten Kunststoffs und/oder an Stellen mit hohem Faseranteil durch Erhebungen gebildet sein. Auch derartige Unregelmäßigkeiten beziehungsweise Unebenheiten lassen sich durch die Ausgleichsschicht einfach und zuverlässig ausgleichen.

Das erfindungsgemäße System zum Überwachen eines Drucktanks umfasst wenigstens einen erfindungsgemäßen Drucktank. Eine Auswerteeinrichtung des Systems ist zum Auswerten der zumindest einen mittels der wenigstens einen Sensoreinrichtung erfassbaren Größe vorgesehen. Die Auswerteeinrichtung kann als Steuergerät, insbesondere als elektronisches Steuergerät, oder dergleichen ausgebildet sein.

Die, insbesondere elektronische, Auswerteeinrichtung, welche zum Erfassen von Messsignalen der wenigstens einen Sensoreinrichtung ausgebildet ist, kann insbesondere eine Anisotropie der Ausgleichsschicht berücksichtigen. Wenn also die Ausgleichsschicht anisotrop ausgebildet ist, kann mittels der Auswerteeinrichtung, beispielsweise durch Heranziehen einer Korrelationsgleichung, das mittels der Sensoreinrichtung erfasste Messsignal umgerechnet werden. Auf diese Weise kann beispielsweise eine Hauptdehnung des Grundkörpers in die tatsächlich gegebene Richtung und um den tatsächlich gegebenen Betrag anhand des Messsignals ermittelt werden. Folglich kann sehr einfach eine direkte Zustandsüberwachung des Drucktanks bewerkstelligt werden.

Insbesondere wenn ein Betrag und/oder eine Hauptrichtung beispielsweise einer Dehnung des Grundkörpers aufgrund der anisotropen Eigenschaften der Ausgleichsschicht von dem Betrag und/oder der Hauptrichtung verschieden ist, welche mittels der Sensoreinrichtung erfasst werden, kann eine entsprechende Korrelation bei einem Kalibrieren der Auswerteeinrichtung ermittelt werden. Vorzugsweise erfolgt dies vor einer Inbetriebnahme des Systems.

Das erfindungsgemäße Kraftfahrzeug weist wenigstens einen erfindungsgemäßen Drucktank oder ein erfindungsgemäßes System auf.

Vorzugsweise ist eine Warneinrichtung des Kraftfahrzeugs zum Ausgeben einer Warnung in Abhängigkeit von dem Zustand des Grundkörpers des wenigstens einen Drucktanks ausgebildet. Dementsprechend kann bei einem Fehler beziehungsweise einer Abweichung des Zustands des Grundkörpers von einem vorbestimmten Zustand frühzeitig gewarnt werden, und es lassen sich rechtzeitig Gegenmaßnahmen ergreifen.

Beispielsweise kann die Warnung zum Inhalt haben, dass eine zu große Menge an Brennstoff in das Behältnis eingebracht wurde oder dass in dem Behältnis und/oder in der Umgebung des Drucktanks eine unerwünscht große Hitze herrscht. In letzterem Fall kann als Gegenmaßnahme ein Kühlen des Drucktanks oder ein Verbringen des Drucktanks in eine kühlere Umgebung vorgenommen werden. Des Weiteren kann etwa bei einer kritischen Deformation des Grundkörpers Brennstoff aus dem Drucktank abgelassen werden, um ein Bersten des Drucktanks zu vermeiden.

Zu der Erfindung gehören auch Weiterbildungen des erfindungsgemäßen Systems und des erfindungsgemäßen Kraftfahrzeugs, die Merkmale aufweisen, wie sie bereits im Zusammenhang mit den Weiterbildungen des erfindungsgemäßen Drucktanks beschrieben worden sind. Aus diesem Grund sind die entsprechenden Weiterbildungen des erfindungsgemäßen Systems und des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: ausschnittsweise einen aus faserverstärktem Kunststoff gebildeten Grundkörper eines Drucktanks;
- Fig. 2: schematisch eine Sensoreinrichtung in Form eines Dehnungsmessstreifens, welcher einen auf eine Folie gedruckten elektrischen Leiter umfasst;
- Fig. 3: stark schematisiert und in einer Schnittansicht den Drucktank, welcher außenseitig mit einer auf einer Ausgleichsschicht angeordneten Sensoreinrichtung versehen ist;
- Fig. 4: schematisch einen vergrößerten Ausschnitt des Drucktanks gemäß Fig. 3;
- Fig. 5: schematisch ein System zum Überwachen des Drucktanks gemäß Fig. 3; und
- Fig. 6: ein Kraftfahrzeug mit dem System gemäß Fig. 5.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

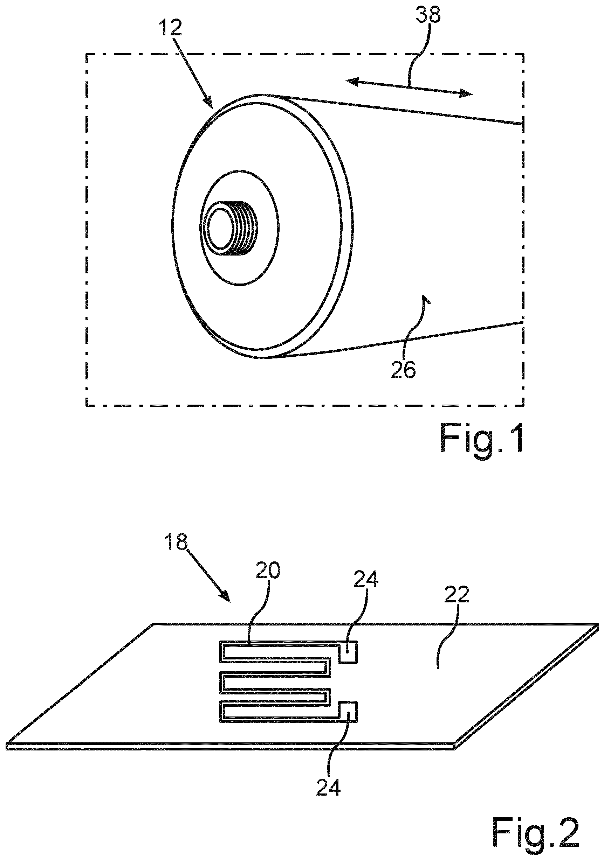

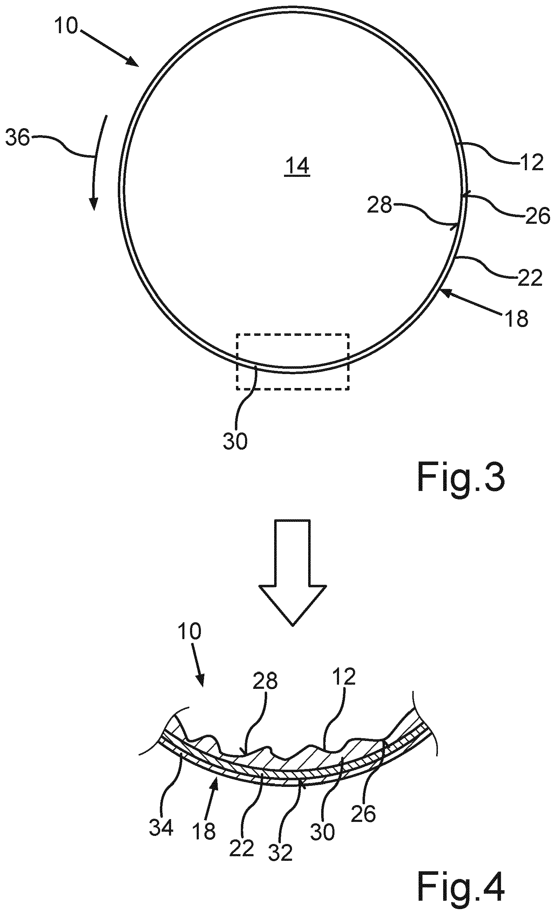

Von einem Druckbehälter oder Drucktank 10, welcher in Fig. 3 in einer schematischen Schnittansicht gezeigt ist, ist in Fig. 1 ein nach Art eines länglichen Zylinders ausgebildeter Grundkörper 12 ausschnittsweise und perspektivisch gezeigt. Der Grundkörper 12 ist hierbei aus faserverstärktem Kunststoff gebildet. Die nachfolgenden Ausführungen haben jedoch auch für einen Drucktank 10 oder Druckbehälter Gültigkeit, bei welchem der Grundkörper 12 aus Metall wie etwa aus Aluminium oder aus Stahl, insbesondere aus Edelstahl, oder dergleichen gefertigt ist. Durch den Grundkörper 12 ist ein Behältnis gebildet, in welchem ein komprimierter Brennstoff, beispielsweise Wasserstoff in flüssigem oder in komprimiertem, gasförmigem Zustand aufgenommen beziehungsweise gespeichert werden kann. Der Drucktank 10 kann jedoch auch zum Speichern anderer komprimierter Brennstoffe verwendet werden, beispielsweise zum Speichern von Flüssiggas (LPG, Liquefied Petroleum Gas), von Flüssigerdgas (LNG, Liquefied Natural Gas) oder von komprimiertem Erdgas (CNG, Compressed Natural Gas).

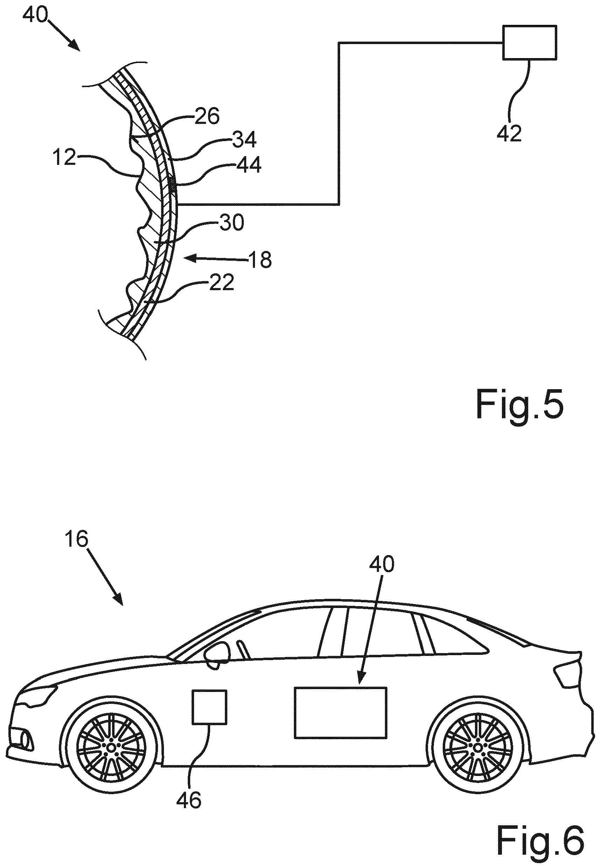

Bei einem derartigen Drucktank 10 ist man bestrebt jederzeit in Erfahrung zu bringen, in welchem Zustand sich der Grundkörper 12 befindet. So kann zeitnah reagiert werden, wenn beispielsweise im Inneren beziehungsweise in einem Innenraum 14 des Drucktanks 10 (vergleiche Fig. 3) ein derart hoher Druck vorliegt, dass es zu einer starken Verformung oder gar zu einer Leckage des Grundkörpers 12 kommen kann. Des Weiteren können Einflüsse von au-ßen wie etwa eine Druckbeaufschlagung des Drucktanks 10 aufgrund eines Aufpralls auf einen Gegenstand oder dergleichen zu einer Beeinträchtigung oder Schädigung des Grundkörpers 12 führen. Dies gilt insbesondere, wenn ein Kraftfahrzeug 16 (vergleiche Fig. 6), in welchem der Drucktank 10 angeordnet ist, in einen Unfall verwickelt ist.

Vorliegend ist der Drucktank 10 zum Zwecke des Überwachens des Zustands des Grundkörpers 12 mit wenigstens einer Sensoreinrichtung ausgestattet, wie sie beispielhaft und schematisch in Fig. 2 gezeigt ist. Demgemäß kann die Sensoreinrichtung als Dehnungsmessstreifen 18 ausgebildet sein. Der Dehnungsmessstreifen 18 umfasst gemäß der schematischen Darstellung in Fig. 2 wenigstens einen Leiter 20 aus einem elektrisch leitfähigen Material, welcher auf einen Träger wie etwa eine Folie 22 aufgebracht, insbesondere aufgedruckt, sein kann. Über Anschlüsse 24 kann die durch den Leiter 20 gebildete Leiterschleife beispielsweise mit einer Spannung beaufschlagt werden. Bei einer Verformung des Leiters 20 ändert sich der elektrische Widerstand des Leiters 20, sodass in Abhängigkeit vom elektrischen Widerstand auf eine Dehnung oder Stauchung eines Körpers geschlossen werden kann, an welchem der Dehnungsmessstreifen 18 oder eine derartige Sensoreinrichtung angeordnet ist. Der Dehnungsmessstreifen 18 kann auch eine Mehrzahl derartiger Leiter 20 aufweisen.

Gemäß Fig. 1 weist der Grundkörper 12 eine Außenseite 26 auf, also eine der Umgebung des Drucktanks 10 zugewandte Seite. Demgegenüber ist eine Innenseite 28 des Grundkörpers 12 dem Innenraum 14 zugewandt, in welchem sich nach einem Befüllen des Drucktanks 10 mit dem Brennstoff der Brennstoff befindet (vergleiche Fig. 3). Zur Sicherstellung einer ausreichenden Dichtigkeit kann der Grundkörper 12 an der Innenseite 28 mit einer vorliegend nicht näher gezeigten Auskleidung versehen sein, welche auch als Liner bezeichnet wird.

Es ist zweckmäßig, wenn mittels der Sensoreinrichtung einerseits Zustandsänderungen des Grundkörpers 12 erfasst werden können, welche auf Vorgängen im Innenraum 14 des Drucktanks 10 zurückzuführen sind. Bei solchen Vorgängen kann es sich um Änderungen des Drucks und/oder der Temperatur im Innenraum 14 des Drucktanks 10 handeln, insbesondere um einen Druckanstieg und/oder um einen Temperaturanstieg. Derartige Vorgänge können nämlich zu einer Dehnung des Grundkörpers 12 führen, welche mittels des Dehnungsmessstreifens 18 erfasst werden kann. Des Weiteren ist es vorteilhaft, wenn mittels des Dehnungsmessstreifens 18 auch Zustandsänderungen des Grundkörpers 12 erfasst werden können, welche aus Einwirkungen auf den Grundkörper 12 von außen, also von der Außenseite 26 her resultieren.

Vorliegend ist daher die Sensoreinrichtung in Form der bereichsweise elektrisch leitfähigen Folie 22 außenseitig an dem Grundkörper 12 angeordnet. Hierbei befindet sich die Folie 22 jedoch nicht in direktem Kontakt mit der Außenseite 26. Vielmehr ist zwischen der Außenseite 26 des Grundkörpers 12 und der Folie 22 mit dem elektrischen Leiter 20, durch welche die wenigstens eine Sensoreinrichtung bereitgestellt ist, eine Grenzschicht beziehungsweise Zwischenschicht oder Ausgleichsschicht 30 angeordnet. Dies geht insbesondere aus der vergrößerten Schnittansicht eines Ausschnitts des Drucktanks 10 in Fig. 4 gut hervor.

Die Ausgleichsschicht 30 hat eine Mehrzahl von Funktionen. Zum einen können an der Außenseite 26 des Grundkörpers 12 Unebenheiten beziehungsweise Unregelmäßigkeiten ausgebildet sein, wie dies schematisch in Fig. 4 gezeigt ist. Bei Ausbildung des Grundkörpers 12 aus faserverstärktem Kunststoff können diese Unebenheiten durch Erhebungen an Stellen gebildet sein, an welchen ein hoher Faseranteil vorliegt, und beispielsweise durch sogenannte Einfallstellen oder Einbuchtungen in Bereichen des faserverstärkten Kunststoffmaterials, in welchen ein hoher Matrixanteil, also etwa ein hoher Anteil an ausgehärtetem Harz vorliegt. Das Vorhandensein derartiger Unebenheiten würde es schwierig machen, die Folie 22 in flächige Anlage mit der Außenseite 26 des Grundkörpers 12 zu bringen.

Vorliegend ist die Ausgleichsschicht 30 jedoch dazu ausgebildet, Unebenheiten der Außenseite 26 des Grundkörpers 12 beziehungsweise an der Außenseite 26 des Grundkörpers 12 vorhandene Unebenheiten zumindest im Bereich der Folie 22 und somit der Sensoreinrichtung etwa in Form des Dehnungsmessstreifens 18 auszugleichen. Somit ist sichergestellt, dass die Folie 22 flächig an der Ausgleichsschicht 30 anliegt. Jegliche Veränderung der Form des Grundkörpers 12 wird folglich über die Ausgleichsschicht 30 an die Folie 22 der Sensoreinrichtung, vorliegend also des Dehnungsmessstreifens 18 weitergegeben.

Die Ausgleichsschicht 30 dient also auch zur Weitergabe beziehungsweise zum Transport von Informationen über den Zustand des Grundkörpers 12. Denn Änderungen der Gestalt des Grundkörpers 12, welche auf Vorgängen im Innenraum 14 des Drucktanks 10 beruhen, werden über die Ausgleichsschicht 30 an die Sensoreinrichtung weitergegeben beziehungsweise weitergeleitet.

Darüber hinaus dient die Ausgleichsschicht 30 als Trägermaterial für die Sensoreinrichtung. Durch dieses Trägermaterial ist ein Anhaften eines Verbunds an der Außenseite 26 des Grundkörpers 12 bewirkt, wobei der Verbund die Ausgleichsschicht 30 und die Sensoreinrichtung umfasst.

Es kann vorgesehen sein, dass über die Ausgleichsschicht 30 eine Wärmeleitung aus dem Innenraum 14 hin zu der Sensoreinrichtung erfolgt. Auf diese Weise können auch Änderungen einer Temperatur in dem Innenraum 14 des Drucktanks 10 erfasst werden.

Die Schicht oder Folie 22, welche durch das Vorsehen des elektrischen Leiters 20 bereichsweise elektrisch leitfähig ist, ist gemäß Fig. 4 an einer dem Grundkörper 12 abgewandten Oberseite 32 mit einer Schutzschicht 34 aus einem elektrisch isolierenden Material versehen. Dadurch ist ein mechanischer Schutz für den Leiter 20 der Sensoreinrichtung bereitgestellt.

Mittels der Ausgleichsschicht 30 wird somit die elektrisch leitfähige Schicht in Form der Sensoreinrichtung auf den Grundkörper 12 des Drucktanks 10 beziehungsweise einer derartigen Gasflasche geklebt. Da die Grenzschicht oder Ausgleichsschicht 30 einerseits der Anhaftung dient und andererseits der Weiterleitung von Einflüssen aus dem Inneren des Drucktanks 10 an die im Bereich des Leiters 20 elektrisch leitfähige Folie 22, können Rückschlüsse auf den Zustand des Grundkörpers 12 gezogen werden.

Des Weiteren ist es möglich, eine Verformung des Grundkörpers 12, welche auf eine Einwirkung auf den Grundkörper 12 von der Außenseite 26 her zurückzuführen ist, über die an der Ausgleichsschicht 30 flächig anliegende Sensoreinrichtung etwa in Form des Dehnungsmessstreifens 18 zu erfassen. Durch den direkten Kontakt der Folie 22 mit der Ausgleichsschicht 30 können auf derartigen Deformationen des Grundkörpers 12 beruhende Informationen ohne Verzerrungen des Ergebnisses erfasst werden.

Die bereichsweise elektrisch leitfähige Schicht in Form der den Leiter 20 aufweisenden Folie 22 beziehungsweise ein derartiges Sensorlaminat kann vollflächig auf den Grundkörper 12 aufgebracht sein. Zum Erfassen von Verformungen des Grundkörpers 12 ist es jedoch ausreichend, ein derartiges Sensorlaminat lediglich an einem Teil des Grundkörpers 12 anzubringen, etwa indem der Verbund, welcher die Ausgleichsschicht 30 und die Sensoreinrichtung umfasst, als Streifen ausgebildet ist.

Ein solcher Streifen kann insbesondere in Umfangsrichtung, welche in Fig. 3 durch einen Pfeil 36 veranschaulicht ist, um den Grundkörper 12 umlaufen. Der wenigstens eine Streifen kann sich jedoch auch in axialer Richtung, welche in Fig. 1 durch einen weiteren Pfeil 38 veranschaulicht ist, entlang des Grundkörpers 12 erstrecken.

Von ihren Eigenschaften her kann die Ausgleichsschicht 30 an den oberflächenstrukturierten Grundkörper 12 angepasst sein, etwa im Hinblick auf das Anhaften an dem Grundkörper 12, im Hinblick auf die Größe der Unebenheiten und dergleichen. Die Grenzschicht oder Ausgleichsschicht 30 übernimmt nämlich einerseits die Aufgabe des Toleranzausgleichs zwischen dem oberflächenstrukturierten Grundkörper 12 und der zumindest teilweise elektrisch leitfähigen Schicht in Form der Sensoreinrichtung.

Die Weitergabe von Dehnungen des Grundkörpers 12 über die Grenzschicht oder Ausgleichsschicht 30 an die Sensoreinrichtung beziehungsweise das Sensorlaminat kann auch deswegen von der Ausgleichsschicht 30 gut erfüllt werden, weil die Ausgleichsschicht 30 vorzugsweise eine sehr geringe Eigensteifigkeit aufweist. Insbesondere kann die maximale Steifigkeit der Ausgleichsschicht 30 bei etwa 3000 MPa liegen. Als Materialien zum Bereitstellen der Ausgleichsschicht 30, welche eine derartig geringe Steifigkeit insbesondere im Hinblick auf eine Zugbelastung aufweisen, kommen Kunststoffmaterialien, insbesondere in Form von aus Kunststoff gebildeten Schäumen oder dergleichen in Betracht.

In Fig. 5 ist schematisch ein System 40 gezeigt, welches zusätzlich zu der Sensoreinrichtung eine Auswerteeinrichtung 42 umfasst. Die Auswerteeinrichtung 42 dient dem Auswerten von Größen, welche mittels der wenigstens einen Sensoreinrichtung etwa in Form des Dehnungsmessstreifens 18 erfasst werden können.

In Fig. 5 ist lediglich schematisch gezeigt, wie die bereichsweise elektrisch leitfähige Folie 22 mit der Auswerteeinrichtung 42 gekoppelt ist, welche beispielsweise in dem Kraftfahrzeug 16 (vergleiche Fig. 6) angeordnet sein kann. Hierbei kann die Auswerteeinrichtung 42 mit den Anschlüssen 24 (vergleiche Fig. 2) über eine Leitung verbunden sein. Des Weiteren ist es möglich, Messsignale, welche mit den von der Sensoreinrichtung erfassbaren Größen korrespondieren, drahtlos an die Auswerteeinrichtung 42 zu übertragen.

Eine entsprechende Übertragungseinrichtung zum drahtlosen Übertragen von Messsignalen kann beispielsweise als RFID-Chip 44 ausgebildet sein, welcher in Fig. 5 schematisch gezeigt ist. Über den RFID-Chip 44 können somit Sensorsignale kabellos an die Auswerteeinrichtung 42 beziehungsweise an eine übergeordnete Kontrolleinrichtung des Systems 40 übertragen werden.

Wie in Fig. 6 schematisch gezeigt, kann das System 40 insbesondere in dem Kraftfahrzeug 16 angeordnet sein. So kann der wenigstens eine Drucktank 10 des Systems 40, welcher sich in dem Kraftfahrzeug 16 befindet, im Hinblick auf den Zustand des Grundkörpers 12 überwacht werden. Das Kraftfahrzeug 16 kann eine Warneinrichtung 46 aufweisen, welche zum Ausgeben einer Warnung in Abhängigkeit von dem Zustand des Grundkörpers 12 des Drucktanks 10 ausgebildet ist.

Insgesamt zeigen die Beispiele, wie durch die Erfindung ein externes und internes Condition Monitoring beziehungsweise Zustandsmonitoring von Gasflaschen oder dergleichen Druckbehältern beziehungsweise Drucktanks 10 bereitgestellt werden kann.

## Patentansprüche

1. Drucktank, insbesondere für ein Kraftfahrzeug (16), welcher zum Speichern eines komprimierten Brennstoffs ausgebildet ist, mit einem Grundkörper (12), durch welchen ein Behältnis zum Aufnehmen des Brennstoffs gebildet ist, und mit wenigstens einer zumindest einen elektrischen Leiter (20) umfassenden Sensoreinrichtung (18) zum Erfassen zumindest einer Größe, welche ein Rückschließen auf einen Zustand des Grundkörpers (12) zulässt,
wobei zwischen der wenigstens einen Sensoreinrichtung (18) und einer Außenseite (26) des Grundkörpers (12) eine Ausgleichsschicht (30) angeordnet ist, welche dazu ausgebildet ist, bei einem Vorhandensein von Unebenheiten an der Außenseite (26) des Grundkörpers (12) die Unebenheiten zumindest im Bereich der wenigstens einen Sensoreinrichtung (18) auszugleichen,
**dadurch gekennzeichnet, dass**
die Ausgleichsschicht (30) anisotrop ausgebildet ist, wobei eine Verformung der Ausgleichsschicht (30) auf einer dem Grundkörper (12) zugewandten Seite der Ausgleichsschicht (30) um einen ersten Betrag eine Verformung der Ausgleichsschicht (30) auf einer der wenigstens einen Sensoreinrichtung (18) zugewandten Seite der Ausgleichsschicht (30) um einen zweiten Betrag bewirkt, welcher größer ist als der erste Betrag.

2. Drucktank nach Anspruch 1,
**dadurch gekennzeichnet, dass**
die Ausgleichsschicht (30) eine größere Dicke aufweist als die wenigstens eine Sensoreinrichtung (18).

3. Drucktank nach Anspruch 1 oder 2,
**dadurch gekennzeichnet, dass**
eine Hauptrichtung der Verformung der Ausgleichsschicht (30) um den ersten Betrag von einer Hauptrichtung der Verformung der Ausgleichsschicht (30) um den zweiten Betrag verschieden ist.

4. Drucktank nach einem der vorhergehenden Ansprüche,
**dadurch gekennzeichnet, dass**
die wenigstens eine Sensoreinrichtung (18) an einer dem Grundkörper (12) abgewandten Oberseite (32) eine Schutzschicht (34) aus einem elektrisch isolierenden Material aufweist.

5. Drucktank nach einem der vorhergehenden Ansprüche,
**dadurch gekennzeichnet, dass**
die Ausgleichsschicht (30) als Trägermaterial für die wenigstens eine Sensoreinrichtung (18) ausgebildet ist, durch welches ein Anhaften eines die Ausgleichsschicht (30) und die wenigstens eine Sensoreinrichtung (18) umfassenden Verbunds an der Außenseite (26) des Grundkörpers (12) bewirkt ist.

6. Drucktank nach einem der vorhergehenden Ansprüche,
**dadurch gekennzeichnet, dass**
ein die Ausgleichsschicht (30) und die wenigstens eine Sensoreinrichtung (18) umfassender Verbund als, insbesondere in Umfangsrichtung (36) um den Grundkörper (12) umlaufender, Streifen ausgebildet ist.

7. Drucktank nach einem der vorhergehenden Ansprüche,
**dadurch gekennzeichnet, dass**
die wenigstens eine Sensoreinrichtung (18) zumindest einen Anschluss (24) für ein leitungsgebundenes Abgreifen eines mit der zumindest einen Größe korrespondierenden Messsignals aufweist und/oder die wenigstens eine Sensoreinrichtung (18) eine Übertragungseinrichtung (44) zum drahtlosen Übertragen eines mit der zumindest einen Größe korrespondierenden Messsignals aufweist.

8. Drucktank nach einem der vorhergehenden Ansprüche,
**dadurch gekennzeichnet, dass**
die, insbesondere aus Kunststoff gebildete, Ausgleichsschicht (30) eine Zugfestigkeit von maximal 3000 MPa aufweist und/oder der Grundkörper (12) zumindest überwiegend aus faserverstärktem Kunststoff gebildet ist.

9. System zum Überwachen eines Drucktanks (10), mit wenigstens einem Drucktank (10) nach einem der vorhergehenden Ansprüche, und mit einer Auswerteeinrichtung (42) zum Auswerten der zumindest einen mittels der wenigstens einen Sensoreinrichtung (18) erfassbaren Größe.

10. Kraftfahrzeug mit wenigstens einem Drucktank (10) nach einem der Ansprüche 1 bis 8 oder mit einem System (40) nach Anspruch 9, wobei wenigstens eine Warneinrichtung des Kraftfahrzeugs (16) zum Ausgeben einer Warnung in Abhängigkeit von dem Zustand des Grundkörpers (12) des wenigstens einen Drucktanks (10) ausgebildet ist.

## Claims

1. Pressure tank, in particular for a motor vehicle (16), which is designed to store a compressed fuel, having a main body (12) which forms a container for receiving the fuel, and having at least one sensor apparatus (18) comprising at least one electrical conductor (20) for detecting at least one variable which allows conclusions to be drawn about a state of the main body (12),
wherein a compensating layer (30) is arranged between the at least one sensor apparatus (18) and an outer side (26) of the main body (12), which compensating layer is designed to compensate for unevenness at least in the region of the at least one sensor apparatus (18) if unevenness is present on the outer side (26) of the main body (12),
**characterised in that**
the compensating layer (30) is anisotropic, wherein deformation of the compensating layer (30) on a side of the compensating layer (30) facing the main body (12) by a first amount causes deformation of the compensating layer (30) on a side of the compensating layer (30) facing the at least one sensor apparatus (18) by a second amount which is greater than the first amount.

2. Pressure tank according to claim 1,
**characterised in that**
the compensating layer (30) has a greater thickness than the at least one sensor apparatus (18).

3. Pressure tank according to claim 1 or 2,
**characterised in that**
a main direction of the deformation of the compensating layer (30) by the first amount is different from a main direction of the deformation of the compensating layer (30) by the second amount.

4. Pressure tank according to any one of the preceding claims,
**characterised in that**
the at least one sensor apparatus (18) has a protective layer (34) of an electrically insulating material on an upper side (32) facing away from the main body (12).

5. Pressure tank according to any one of the preceding claims,
**characterised in that**
the compensating layer (30) is formed as a carrier material for the at least one sensor apparatus (18), by means of which a composite comprising the compensating layer (30) and the at least one sensor apparatus (18) is caused to adhere to the outer side (26) of the main body (12).

6. Pressure tank according to any one of the preceding claims,
**characterised in that**
a composite comprising the compensating layer (30) and the at least one sensor apparatus (18) is formed as a strip running around the main body (12), in particular in the circumferential direction (36).

7. Pressure tank according to any one of the preceding claims,
**characterised in that**
the at least one sensor apparatus (18) has at least one terminal (24) for wired tapping of a measurement signal corresponding to the at least one variable and/or the at least one sensor apparatus (18) has a transmission apparatus (44) for wireless transmission of a measurement signal corresponding to the at least one variable.

8. Pressure tank according to any one of the preceding claims,
**characterised in that**
the compensating layer (30), which is formed in particular from plastic, has a tensile strength of at most 3000 MPa and/or the main body (12) is formed at least predominantly from fibre-reinforced plastic.

9. System for monitoring a pressure tank (10), having at least one pressure tank (10) according to any one of the preceding claims, and having an evaluation apparatus (42) for evaluating the at least one variable which can be detected by means of the at least one sensor apparatus (18).

10. Motor vehicle having at least one pressure tank (10) according to any one of claims 1 to 8 or having a system (40) according to claim 9, wherein at least one warning apparatus of the motor vehicle (16) is designed to issue a warning depending on the state of the main body (12) of the at least one pressure tank (10).

## Revendications

1. Réservoir sous pression, en particulier pour un véhicule automobile (16), lequel est conçu pour stocker un carburant comprimé, avec un corps de base (12), par lequel est formé un récipient pour recevoir le carburant, et avec au moins un dispositif de détection (18) comprenant au moins un conducteur électrique (20) pour détecter au moins une grandeur, laquelle permet de conclure à un état du corps de base (12),
dans lequel, entre le au moins un dispositif de détection (18) et un côté extérieur (26) du corps de base (12), est agencée une couche de compensation (30) qui est conçue pour, en cas de présence d'inégalités sur le côté extérieur (26) du corps de base (12), compenser les inégalités au moins dans la zone du au moins un dispositif de détection (18),
**caractérisé en ce que**
la couche de compensation (30) est conçue de manière anisotrope, dans lequel une déformation de la couche de compensation (30) sur un côté de la couche de compensation (30) tourné vers le corps de base (12) d'une première valeur provoque une déformation de la couche de compensation (30) sur un côté de la couche de compensation (30) tourné vers l'au moins un dispositif de détection (18) d'une seconde valeur, laquelle est supérieure à la première valeur.

2. Réservoir sous pression selon la revendication 1,
**caractérisé en ce que**
la couche de compensation (30) présente une épaisseur supérieure à celle du au moins un dispositif de détection (18).

3. Réservoir sous pression selon la revendication 1 ou 2,
**caractérisé en ce que**
une direction principale de la déformation de la couche de compensation (30) de la première quantité est différente d'une direction principale de la déformation de la couche de compensation (30) de la seconde quantité.

4. Réservoir sous pression selon l'une quelconque des revendications précédentes,
**caractérisé en ce que**
l'au moins un dispositif de détection (18) présente sur une face supérieure (32) opposée au corps de base (12) une couche de protection (34) en un matériau électriquement isolant.

5. Réservoir sous pression selon l'une quelconque des revendications précédentes,
**caractérisé en ce que**
la couche de compensation (30) est conçue comme matériau de support pour l'au moins un dispositif de détection (18), grâce auquel une adhérence d'un composite comprenant la couche de compensation (30) et l'au moins un dispositif de détection (18) est réalisée sur le côté extérieur (26) du corps de base (12).

6. Réservoir sous pression selon l'une quelconque des revendications précédentes,
**caractérisé en ce que**
un composite comprenant la couche de compensation (30) et le au moins un dispositif de détection (18) est conçu comme une bande, en particulier dans la direction périphérique (36) autour du corps de base (12).

7. Réservoir sous pression selon l'une quelconque des revendications précédentes,
**caractérisé en ce que**
l'au moins un dispositif de détection (18) présente au moins un raccordement (24) pour un prélèvement par ligne d'un signal de mesure correspondant à l'au moins une grandeur et/ou l'au moins un dispositif de détection (18) présente un dispositif de transmission (44) pour la transmission sans fil d'un signal de mesure correspondant à l'au moins une grandeur.

8. Réservoir sous pression selon l'une quelconque des revendications précédentes,
**caractérisé en ce que**
la couche de compensation (30), formée en particulier en matière plastique, présente une résistance à la traction de 3 000 MPa maximum et/ou le corps de base (12) est formé au moins principalement en matière plastique renforcée par des fibres.

9. Système de surveillance d'un réservoir sous pression (10), avec au moins un réservoir sous pression (10) selon l'une quelconque des revendications précédentes, et avec un dispositif d'évaluation (42) pour évaluer l'au moins une grandeur pouvant être détectée au moyen de l'au moins un dispositif de détection (18).

10. Véhicule automobile avec au moins un réservoir sous pression (10) selon l'une quelconque des revendications 1 à 8 ou avec un système (40) selon la revendication 9, dans lequel au moins un dispositif d'avertissement du véhicule automobile (16) est conçu pour émettre un avertissement en fonction de l'état du corps de base (12) du au moins un réservoir sous pression (10).
